(19) Europäisches Patentamt
European Patent Office
Office européen des brevets

(11) **EP 4 468 396 A1**

(12) **EUROPEAN PATENT APPLICATION**
published in accordance with Art. 153(4) EPC

(43) Date of publication:
**27.11.2024 Bulletin 2024/48**

(21) Application number: **23827553.1**

(22) Date of filing: **22.06.2023**

(51) International Patent Classification (IPC):
$H01M\ 4/134^{(2010.01)}$     $H01M\ 4/38^{(2006.01)}$
$H01M\ 4/62^{(2006.01)}$      $H01M\ 4/1395^{(2010.01)}$
$H01M\ 4/04^{(2006.01)}$      $H01M\ 10/0525^{(2010.01)}$
$H01M\ 4/02^{(2006.01)}$

(52) Cooperative Patent Classification (CPC):
H01M 4/02; H01M 4/04; H01M 4/134;
H01M 4/1395; H01M 4/38; H01M 4/62;
H01M 10/0525

(86) International application number:
**PCT/KR2023/008714**

(87) International publication number:
**WO 2023/249444 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022  KR 20220076784**

(71) Applicant: **LG Energy Solution, Ltd.
Seoul 07335 (KR)**

(72) Inventors:
• **PARK, Su Jin
  Daejeon 34122 (KR)**
• **LEE, Sangmin
  Daejeon 34122 (KR)**
• **LEE, Jaewook
  Daejeon 34122 (KR)**
• **KWON, Yohan
  Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE COMPOSITION, NEGATIVE ELECTRODE FOR LITHIUM SECONDARY BATTERY COMPRISING SAME, AND LITHIUM SECONDARY BATTERY COMPRISING NEGATIVE ELECTRODE**

(57)    A negative electrode composition, a negative electrode for a lithium secondary battery including the same, a lithium secondary battery including a negative electrode, and a method a manufacturing the negative electrode. The negative electrode composition includes a silicon-containing active material; a negative electrode conductive material; and a negative electrode binder. The negative electrode binder includes a first binder having a Young's modulus of $1 \times 10^3$ MPa or more and a second binder having a strain value of 15% or more. The negative electrode binder satisfies the equation $1 \leq X/Y < 4$, where Y means parts by weight of the first binder based on 100 parts by weight of the negative electrode binder, and X means parts by weight of the second binder based on 100 parts by weight of the negative electrode binder.

Fig. 1

**Description**

## CROSS-REFERENCE TO RELATED APPLICATIONS

This application claims priority to and the benefit of Korean Patent Application No. 10-2022-0076784 filed in the Korean Intellectual Property Office on June 23, 2022, the entire contents of which are incorporated herein by reference.

## TECHNICAL FIELD

The present invention relates to a negative electrode composition, a negative electrode for a lithium secondary battery including the negative electrode composition, a lithium secondary battery including the negative electrode, and a method of manufacturing the negative electrode.

## BACKGROUND ART

Due to the rapid increase in the use of fossil fuels, the demand for the use of alternative energy or clean energy is increasing, and in part, the most actively researched field is a power generation and power storage field using electrochemical reactions.

Currently, a secondary battery is a representative example of an electrochemical device using such electrochemical energy, and its use is gradually extending.

As technology development and demand for mobile devices increase, a demand for secondary batteries as energy sources is also rapidly increasing. Among these secondary batteries, a lithium secondary battery having high energy density and voltage, a long life cycle, and a low self-discharge rate has been commercialized and widely used. In addition, as an electrode for such a high-capacity lithium secondary battery, research is being actively conducted on a method for manufacturing a high-density electrode having a higher energy density per unit volume.

In general, a secondary battery includes a positive electrode, a negative electrode, an electrolyte, and a separator. The negative electrode includes a negative electrode active material for intercalating and deintercalating lithium ions emitted from the positive electrode, and silicon-containing particles having a large discharge capacity may be used as the negative electrode active material.

In accordance with the recent demand for high-density energy batteries, research on a method of increasing the capacity by using silicon-containing compounds such as Si/C or SiOx, which have more than 10 times higher capacity than graphite-containing materials, as the negative electrode active material has been actively conducted. A silicon-containing compound, which is a high-capacity material, has a large capacity compared to graphite used in the related art, but there is a problem in that the volume expands rapidly during the charging process and a conductive path is disconnected, thereby degrading battery characteristics.

Accordingly, in order to solve the problems of using the silicon-containing compound as the negative electrode active material, there have been various methods proposed for suppressing the volume expansion itself or preventing the conductive path from being disconnected, such as a method of regulating a driving potential, a method of further coating a thin film on an active material layer, and a method of controlling the particle diameter of the silicon-containing compound. However, in the case of these methods, since the performance of the battery may be deteriorated, there is a limit in application, and there is still a limit to the commercialization of manufacturing a negative electrode battery having a high content of the silicon-containing compound.

In particular, studies on the composition of the binder according to volume expansion have been conducted, and studies have been conducted to use a binder polymer having strong stress on the side surface in order to suppress volume expansion caused by charging and discharging of the negative electrode active material having a large volume change. However, these binder polymers alone have limitations in suppressing an increase in thickness of the electrode due to the contraction and expansion of the negative electrode active material and the deterioration in performance of the lithium secondary battery derived therefrom.

In addition, in order to solve the problems of volume expansion of the negative electrode having the silicon-containing active material as described above, an aqueous binder having both dispersibility and adhesiveness is used. In the case of the aqueous binder, there is an advantage in that the dispersibility may be improved, but there is a problem in that due to poor stretching properties, an electrical contact between active materials is broken by volume expansion of the active materials as a cycle progresses, and as a result, lifespan characteristics are degraded.

Additionally, it is known that a rubber-containing binder may also be applied to improve the lifespan characteristics, but in the case of the silicon-containing active material, when only a rubber-containing binder is included, the stiffness of the binder is not sufficient, which also limits its application.

In addition, the aqueous binder has a problem in that contraction due to heat is severe during drying of the electrode, which is disadvantageous to the process, but there is a difference in that a styrene-butadiene rubber (SBR) rubber-containing binder with excellent ductility has a relatively low tendency to be contracted during drying.

Therefore, even when a high-capacity material is used to manufacture a high-capacity battery, it is necessary to identify a binder that does not break a conductive network due to volume expansion of the active material and has excellent adhesive strength.

The meaning of the phrase "conductive network" may be understood such that in silicon-containing active material layers, the binder provides adhesion between the electrode active material layer and the current collector, and at the same time, maintains electrical contact by bonding the active material and the conductive material. In other words, a conductive network may mean that electrical contact is maintained at the negative electrode.

The aqueous binder (first binder) may have excellent adhesion but may lack ductility, so the connection between the active material and the conductive material may be broken due to shrinkage or volume expansion of silicon during the drying process. The rubber-containing binder (secondary binder) is a binder that may be relatively ductile and may have a relatively low tendency to shrink upon drying. Therefore, the proper use of both binders plays an important role in securing the challenge network.

[Related Art Document]

[Patent Document]

(Patent Document 1) Japanese Patent Application Laid-Open No. 2009-080971

## SUMMARY OF THE INVENTION

The present invention relates to a binder which does not break a conductive network due to volume expansion of an active material and has excellent adhesive strength with a negative electrode current collector in manufacturing a high-capacity and high-density negative electrode. It was confirmed through studies that the aforementioned problems can be solved by controlling the content part of the binder as well as the Young's modulus and a strain value of the binder. Therefore, the present invention relates to a negative electrode composition, a negative electrode for a lithium secondary battery including the same, a lithium secondary battery including a negative electrode, and a method of manufacturing the negative electrode.

An exemplary embodiment of the present invention provides a negative electrode composition including a silicon-containing active material; a negative electrode conductive material; and a negative electrode binder, in which the negative electrode binder includes a first binder having a Young's modulus of $10^3$ MPa or more and a second binder having a strain value of 15% or more, and the negative electrode binder satisfies Equation 1 below:

$$[\text{Equation 1}]$$

$$1 \leq X/Y < 4,$$

in Equation 1,

Y means parts by weight of the first binder based on 100 parts by weight of the negative electrode binder, and
X means parts by weight of the second binder based on 100 parts by weight of the negative electrode binder.

Another exemplary embodiment of the present invention provides a negative electrode for a lithium secondary battery including a negative electrode current collector layer; and a negative electrode active material layer including the negative electrode composition according to the present invention on one surface or both surfaces of the negative electrode current collector layer.

Yet another exemplary embodiment of the present invention provides a lithium secondary battery including a positive electrode; the negative electrode for the lithium secondary battery according to the present invention; a separator provided between the positive electrode and the negative electrode; and an electrolyte.

According to the exemplary embodiment of the present invention, the negative electrode composition uses a silicon-containing active material, which is a high-capacity material to manufacture a high-capacity battery to solve a problem caused by volume expansion of the silicon-containing active material by applying a specific negative electrode binder.

Particularly, the negative electrode binder includes a first binder having a Young's modulus of $10^3$ MPa or more and a second binder having a strain value of 15% or more, and the negative electrode binder satisfies a range of a specific Equation 1.

Specifically, the negative electrode composition according to the present application may improve the dispersibility for dispersing the active material even when the silicon-containing active material is used, and includes the first and second binders of specific compositions to improve adhesive strength, thereby solving the problem of disconnection of the conductive network due to adhesion and volume expansion at the early and late stages of the battery using the silicon-containing active material.

That is, the negative electrode composition according to the present invention has a high content of silicon-containing active material particles to obtain a high-capacity and high-density negative electrode, and simultaneously has a high content of silicon-containing active material particles and uses a binder of specific composition and content to solve the problems such as volume expansion and the like caused by a high content of silicon-containing active material particles.

BRIEF DESCRIPTION OF THE DRAWINGS

FIG. 1 is a schematic illustrating a stacked structure of a negative electrode for a lithium secondary battery according to an exemplary embodiment of the present invention.
FIG. 2 is a schematic illustrating a stacked structure of a lithium secondary battery according to an exemplary embodiment of the present invention.
FIG. 3 is a schematic illustrating a curl evaluation method of Examples according to the present invention and Comparative Examples.

**DETAILED DESCRIPTION**

Before describing the present invention, some terms are first defined.

In the present specification, when a part "comprises" a certain component, unless explicitly described to the contrary, it will be understood to further include other components without the exclusion of any other elements.

In this specification, 'p to q' means a range of 'p or more and q or less'.

In the present specification, "specific surface area" is measured by a BET method, and is specifically calculated from the adsorption amount of nitrogen gas under a liquid nitrogen temperature (77 K) using BELSORP-mino II manufactured by BEL Japan Co., Ltd. That is, in the present invention, the BET specific surface area may mean a specific surface area measured by the measurement method.

In the present specification, "Dn" means a particle size distribution and means a particle diameter at an n% point of a cumulative distribution of the number of particles according to the particle diameter. That is, D50 is a particle diameter (average particle diameter) at 50% point of the cumulative distribution of the number of particles according to the particle diameter, D90 is a particle diameter at 90% point of the cumulative distribution of the number of particles according to the particle diameter, and D10 is a particle diameter at 10% point of the cumulative distribution of the number of particles according to the particle diameter. Meanwhile, the particle size distribution may be measured using a laser diffraction method. Specifically, after dispersing powder to be measured in a dispersion medium, when particles pass through a laser beam by introducing a commercially available laser diffraction particle size measuring device (e.g., Microtrac S3500), a difference in diffraction pattern depending on a particle size is measured to calculate a particle size distribution.

In the present specification, the meaning that the polymer includes certain monomers as a monomer unit means that the monomers participate in a polymerization reaction and are included as a repeating unit in the polymer. In the present specification, when the polymer includes monomers, it is interpreted in the same manner as that the polymer includes monomers as a monomer unit.

In the present specification, the term 'polymer' is understood to be used in a broad meaning including a copolymer unless specified as a 'homopolymer'.

In the present specification, the weight average molecular weight (Mw) and the number average molecular weight (Mn) are molecular weights obtained by using, as a standard material, a monodisperse polystyrene polymer (standard sample) of various polymerization degrees commercially available for measuring molecular weights, and polystyrene conversion measured by gel permeation chromatography (GPC). In the present specification, the molecular weight means a weight average molecular weight unless otherwise specified.

In an exemplary embodiment of the present invention, in the method of measuring the Young's modulus, moisture is removed by placing the binder solution in a coated dish and drying at room temperature for a period of time sufficient to remove the moisture. The dried film is obtained by vacuum drying at 130° C for 10 hours according to the electrode drying temperature. Thereafter, the dried film may be cut or punched in the form of a sample of 6 mm x 100 mm to collect samples, and the tensile strength (Young's modulus) can be measured using UTM equipment.

The Young's modulus differs depending on the measurement method, speed, and measurement state of the binder, but the Young's modulus of the binder may refer to a value measured in a dry room having a dew point of -5 °C to 10 °C and a temperature of about 20 °C to 22 °C.

In the present specification, the dew point refers to the temperature at which condensation starts at a certain temperature when humid air is cooled, and the partial pressure of water vapor in the air becomes equal to the saturated vapor pressure of water at that temperature. That is, when the temperature of the gas containing water vapor is dropped as it is, it may mean the temperature when the relative humidity becomes 100% and dew begins to form.

The dew point of -5 °C to 10 °C and the temperature of 20 °C to 22 °C can generally be defined as a dry room, and the humidity at this time corresponds to a very low level.

In one embodiment of the present invention, in the strain measurement method, moisture is removed by putting the binder solution in a coated dish and drying at room temperature for a long time. The dried film is obtained by vacuum drying at 130° C for 10 hours according to the electrode drying temperature. Thereafter, the dried film may be cut or punched in the form of a sample having a size of 6 mm x 100 mm to collect samples, and tensile strain may be measured using UTM equipment.

The tensile strain of the binder is different depending on the measuring method, speed, and measuring state of the binder, but the strain of the binder is the same as the measurement condition of the Young's modulus.

Hereinafter, Examples of the present invention will be described in detail so as to easily implement those skilled in the art. However, the present invention may be implemented in various different forms and is not limited to the embodiments described herein.

An exemplary embodiment of the present invention provides a negative electrode composition including a silicon-containing active material; a negative electrode conductive material; and a negative electrode binder, in which the negative electrode binder includes a first binder having a Young's modulus of $10^3$ MPa or more and a second binder having a strain value of 15% or more, and the negative electrode binder satisfies Equation 1 below:

$$[\text{Equation 1}]$$

$$1 \leq X/Y < 4,$$

in Equation 1,

Y means parts by weight of the first binder based on 100 parts by weight of the negative electrode binder, and
X means parts by weight of the second binder based on 100 parts by weight of the negative electrode binder.

Specifically, the negative electrode composition according to the present invention may improve the dispersibility for dispersing the active material even when the silicon-containing active material is used, and further includes the first and second binders of specific compositions to improve adhesive strength to solve the problem of disconnection of the conductive network due to adhesive strength and volume expansion at the early and late stages of the battery using the silicon-containing active material.

In the exemplary embodiment of the present invention, the silicon-containing active material may include one or more selected from the group consisting of Si particles, SiOx (0 < x < 2), SiC, and Si alloys.

The active material of the present invention includes a silicon-containing active material. The silicon-containing active material may be SiOx, Si/C, or Si. The SiOx may include a compound represented by SiOx (0 $\leq$ x < 2). Since $SiO_2$ does not react with lithium ions and cannot store lithium, x is preferably within the above range. The silicon-containing active material may be Si/C or Si consisting of a composite of Si and C. In addition, two or more of silicon-containing active materials may be mixed and used. The negative electrode active material may further include a carbon-containing active material together with the aforementioned silicon-containing active material. The carbon-containing active material may contribute to improving excellent cycle characteristics or battery lifespan performance of the negative electrode or the secondary battery of the present invention.

In general, the silicon-containing active material is known to have 10 times higher capacity than a carbon-containing active material, and accordingly, when the silicon-containing active material is applied to the negative electrode, it is expected that an electrode having a high level of energy density can be realized even with a thin thickness.

In an exemplary embodiment of the present invention, there is provided the negative electrode composition in which the silicon-containing active material includes one or more selected from the group consisting of SiOx (x = 0) (i.e., Si particles) and SiOx (0 < x < 2), in which the Si particles may be present in an amount of 70 parts by weight or more based on 100 parts by weight of the silicon-containing active material.

In another exemplary embodiment of the present invention, in the silicon-containing active material, the Si particles may be present in an amount of 70 parts by weight or more, preferably 80 parts by weight or more, and more preferably 90 parts by weight or more, and 100 parts by weight or less, preferably 99 parts by weight or less, and more preferably 95 parts by weight or less, based on 100 parts by weight of the silicon-containing active material.

The silicon-containing active material according to the present invention includes 70 parts by weight or more of the Si particles based on 100 parts by weight of the silicon-containing active material, so that as compared to a silicon-containing active material using SiOx (0 < x < 2) series as a main material, a theoretical capacity is much higher than that of the silicon-containing active material of the present invention. That is, in the case of using SiOx (0 < x < 2)-containing active materials, even if the active material itself is treated in any manner, it is not possible to implement conditions equal to the charging and discharging capacity compared to the case of having the silicon-containing active material of the present invention.

In the exemplary embodiment of the present invention, the silicon-containing active material may use pure silicon (Si) as the silicon-containing active material. The using of the pure silicon (Si) as the silicon-containing active material means including pure Si particles (SiOx (x = 0)), that are not bound with other particles or elements, in the above range, based on 100 parts by weight of the total silicon-containing active material as described above.

The capacity of the silicon-containing active material is significantly high compared to a graphite-containing active material used in the related art so that attempts to apply the silicon-containing active material are increasing, but a volume expansion rate is high during a charging and discharging process, so that it is limited to a case of mixing and using a small amount of the silicon-containing active material with the graphite-containing active material.

Accordingly, in the present invention, while using a high content of silicon-containing active material as a negative electrode active material to improve capacity performance, in order to solve the problems of maintaining the conductive path and maintaining the binding of the conductive material, the binder, and the active material according to the volume expansion, a binder under specific conditions is used.

Meanwhile, an average particle diameter (D50) of the silicon-containing active material of the present invention may be 5 μm to 10 μm, specifically 5.5 μm to 8 μm, more specifically 6 μm to 7 μm. When the average particle diameter is included in the above range, the specific surface area of the particles may be included in a suitable range, so that the viscosity of a negative electrode slurry is formed in an appropriate range. Accordingly, the dispersion of particles constituting the negative electrode slurry becomes smooth, or homogenously dispersed. In addition, as the size of the silicon-containing active material has a value greater than or equal to the range of the lower limit, and since a contact area between the silicon particles and the conductive materials is excellent by a composite consisting of the conductive material and the binder in the negative electrode slurry, so that a possibility that a conductive network will continue is increased, thereby increasing a capacity retention rate. Meanwhile, when the average particle diameter satisfies the range, excessively large silicon particles are excluded to form a smooth surface of the negative electrode, thereby preventing current density non-uniformity during charging and discharging.

In an exemplary embodiment of the present invention, the silicon-containing active material generally has a characteristic BET surface area. The BET surface area of the silicon-containing active material is preferably 0.01 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET surface area is measured according to DIN 66131 (using nitrogen), where the DIN 66131 measurement method corresponds to a method of measuring pores (BET surface area) by adsorption/desorption of nitrogen molecules.

In an exemplary embodiment of the present invention, the silicon-containing active material may exist in, for example, a crystalline or amorphous form, and is preferably not porous. The silicon particles are preferably spherical or fragmented particles. As an alternative, but less preferably, the silicon-containing active material may also have a fibrous structure or be present in the form of a silicon-containing film or coating.

In an exemplary embodiment of the present invention, there is provided the negative electrode composition, in which the silicon-containing active material is included in an amount of 60 parts by weight or more based on 100 parts by weight of the negative electrode composition.

In another exemplary embodiment of the present invention, the silicon-containing active material may be present in an amount of 60 parts by weight or more, preferably 65 parts by weight or more, and more preferably 70 parts by weight or more, and 95 parts by weight or less, preferably 90 parts by weight or less, and more preferably 85 parts by weight or less, based on 100 parts by weight of the negative electrode composition.

The negative electrode composition according to the present invention uses specific conductive material and binder capable of holding a volume expansion rate during the charging and discharging process even when a silicon-containing active material with a significantly high capacity is used within the range to have an excellent output characteristic in charging and discharging without lowering the performance of the negative electrode even by including the range.

In an exemplary embodiment of the present invention, the silicon-containing active material may have a non-spherical shape, and its circularity is, for example, 0.9 or less, for example, 0.7 to 0.9, for example, 0.8 to 0.9, for example, 0.85 to 0.9.

In the present invention, the circularity is determined by Equation 1-1 below, wherein A represents an area, and P represents a boundary line:

[Equation 1-1

$$4\pi A/P^2$$

In the related art, it has been common to use only a graphite-containing compound as the negative electrode active material, but recently, as the demand for high-capacity batteries increases, attempts to mix and use silicon-containing compounds to increase the capacity are increasing. However, in the case of the silicon-containing compound, even if the characteristics of the silicon-containing active material itself are controlled according to the present invention as described above, there is a problem that the volume rapidly expands during the charge/discharge process to partially damage the conductive path formed in the negative electrode active material layer.

Accordingly, in an exemplary embodiment of the present invention, the negative electrode conductive material may include at least one selected from the group consisting of a dot type conductive material, a planar conductive material, and a linear conductive material.

In an exemplary embodiment of the present invention, the dot type conductive material may be used to improve conductivity of a negative electrode, and refers to a dot type or spherical conductive material having conductivity without causing a chemical change. Specifically, the dot type conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide and polyphenylene derivatives, preferably carbon black in terms of implementing high conductivity and having excellent dispersibility.

In an exemplary embodiment of the present invention, the dot type conductive material may have a BET specific surface area of 40 m$^2$/g or more and 70 m$^2$/g or less, preferably 45 m$^2$/g or more and 65 m$^2$/g or less, and more preferably 50 m$^2$/g or more and 60 m$^2$/g or less.

In an exemplary embodiment of the present invention, the dot type conductive material may satisfy a functional group content (Volatile matter) of 0.01% or more and 1% or less, preferably 0.01% or more and 0.3% or less, and more preferably 0.01% or more and 0.1% or less.

In particular, when the functional group content of the dot type conductive material satisfies the above range, functional groups present on the surface of the dot type conductive material exist, so that the dot type conductive material may be smoothly dispersed in the solvent when water is used as a solvent. In particular, in the present invention, the functional group content of the dot type conductive material may be lowered by using silicon particles and a specific binder, thereby having an excellent effect in improving dispersibility.

In an exemplary embodiment of the present invention, it is characterized in that the dot type conductive material having a functional group content within the above range is included together with the silicon-containing active material, so that the functional group content may be controlled according to the degree of heat treatment of the dot type conductive material.

In the embodiment of the present invention, the particle diameter of the dot type conductive material may be 10 nm to 100 nm, preferably 20 nm to 90 nm, and more preferably 20 nm to 60 nm.

In an exemplary embodiment of the present invention, the conductive material may include a planar conductive material.

The planar conductive material may serve to improve conductivity by increasing a surface contact between the silicon particles in the negative electrode, and simultaneously suppress the disconnection of the conductive path due to the volume expansion. The planar conductive material may be expressed as a plate type conductive material or a bulk type conductive material.

In an exemplary embodiment of the present invention, the planar conductive material may include at least one selected from the group consisting of plate-like graphite, graphene, graphene oxide, and graphite flake, preferably plate-like graphite.

In an exemplary embodiment of the present invention, an average particle diameter (D50) of the planar conductive material may be 2 $\mu$m to 7 $\mu$m, specifically 3 $\mu$m to 6 $\mu$m, more specifically 3.5 $\mu$m to 5 $\mu$m. When the range is satisfied, the planar conductive material is easily dispersed without causing an excessive increase in viscosity of the negative electrode slurry due to a sufficient particle size. Therefore, the dispersion effect is excellent when dispersing using the same equipment and time.

In an exemplary embodiment of the present invention, there is provided the negative electrode composition in which the planar conductive material has D10 of 0.5 $\mu$m or more and 2.0 $\mu$m or less, D50 of 2.5 $\mu$m or more and 3.5 $\mu$m or less, and D90 of 6.5 $\mu$m or more and 15.0 $\mu$m or less.

In an exemplary embodiment of the present invention, the planar conductive material may use a high specific surface area planar conductive material having a high BET specific surface area; or a low specific surface area planar conductive material.

In an exemplary embodiment of the present invention, as the planar conductive material, a high specific surface area planar conductive material; or a low specific surface area planar conductive material may be used without limitation, but in particular, since the planar conductive material according to the present invention may be affected by dispersion to some extent in electrode performance, it is particularly preferable to use the low specific surface area planar conductive material that does not cause a problem in dispersion.

In an exemplary embodiment of the present invention, the planar conductive material may have a BET specific surface area of 1 $m^2/g$ or more.

In another exemplary embodiment, the planar conductive material may have a BET specific surface area of 1 $m^2/g$ or more and 500 $m^2/g$ or less, preferably 5 $m^2/g$ or more and 300 $m^2/g$ or less, and more preferably 5 $m^2/g$ or more and 250 $m^2/g$ or less.

The planar conductive material according to the present invention may use a planar conductive material with a high specific surface area; or a planar conductive material having a low specific surface area.

In yet another exemplary embodiment, the planar conductive material is the planar conductive material with a high specific surface area, and the BET specific surface area may satisfy the range of 50 $m^2/g$ or more and 500 $m^2/g$ or less, preferably 80 $m^2/g$ or more and 300 $m^2/g$ or less, and more preferably 100 $m^2/g$ or more and 300 $m^2/g$ or less.

In yet another exemplary embodiment, the planar conductive material is the planar conductive material with a low specific surface area, and the BET specific surface area may satisfy the range of 1 $m^2/g$ or more and 40 $m^2/g$ or less, preferably 5 $m^2/g$ or more and 30 $m^2/g$ or less, and more preferably 5 $m^2/g$ or more and 25 $m^2/g$ or less.

Other conductive materials may include a linear conductive material such as carbon nanotubes. The carbon nanotubes may be bundle type carbon nanotubes. The bundle type carbon nanotube may include a plurality of carbon nanotube units. Specifically, as used herein, the term 'bundle type' refers to, unless otherwise stated, a bundle or rope type secondary shape, in which a plurality of carbon nanotube units are arranged side by side in substantially the same orientation in a longitudinal axis of the carbon nanotube units or entangled. The carbon nanotube unit has a graphite sheet in the form of a cylinder having a nano-size diameter, and has a sp2 bond structure. In this case, the carbon nanotube units may exhibit characteristics of a conductor or a semiconductor according to rolling angle and structure of the graphite sheet. The bundle type carbon nanotubes may be uniformly dispersed compared to entangled type carbon nanotubes when manufacturing the negative electrode, and form a conductive network in the negative electrode smoothly, thereby improving the conductivity of the negative electrode.

In an exemplary embodiment of the present invention, there is provided the negative electrode composition in which the negative electrode conductive material is included in an amount of 0.1 parts by weight or more and 40 parts by weight or less, for instance 10 parts by weight or more and 40 parts by weight or less, based on 100 parts by weight of the negative electrode composition.

In another exemplary embodiment, the negative electrode conductive material may be included in an amount of 0.1 parts by weight or more and 40 parts by weight or less, preferably 0.2 parts by weight or more and 30 parts by weight or less, more preferably 0.4 parts by weight or more and 25 parts by weight or less, and most preferably 0.4 parts by weight or more and 10 parts by weight or less based on 100 parts by weight of the negative electrode composition.

In an exemplary embodiment of the present invention, there is provided the negative electrode composition in which the negative electrode conductive material includes a planar conductive material; and a linear conductive material.

In an exemplary embodiment of the present invention, there is provided the negative electrode composition in which the negative electrode conductive material includes the planar conductive material in 80 parts by weight or more and 99.9 parts by weight or less; and the linear conductive material in 0.1 parts by weight or more and 20 parts by weight or less, based on 100 parts by weight of the negative electrode conductive material.

In another exemplary embodiment, the negative electrode conductive material may include the planar conductive material in 80 parts by weight or more and 99.9 parts by weight or less, preferably 85 parts by weight or more and 99.9 parts by weight or less, and more preferably 95 parts by weight or more and 98 parts by weight or less, based on 100 parts by weight of the negative electrode conductive material.

In yet another exemplary embodiment, the negative electrode conductive material may include the linear conductive material in 0.1 parts by weight or more and 20 parts by weight or less, preferably 0.1 parts by weight or more and 15 parts by weight or less, and more preferably 0.2 parts by weight or more and 5 parts by weight or less, based on 100 parts by weight of the negative electrode conductive material.

In an exemplary embodiment of the present invention, the negative electrode conductive material includes a planar conductive material and a linear conductive material, and may not significantly affect the lifespan characteristics of an existing lithium secondary battery by satisfying the compositions and ratios, respectively. In particular, in the case of including the planar conductive material and the linear conductive material, it is characterized that the number of points available for charging and discharging increases, so that the output characteristics are excellent at a high C-rate and the generation amount of high-temperature gas is reduced.

In an exemplary embodiment of the present invention, the negative electrode conductive material may be formed of a linear conductive material.

In particular, when the linear conductive material is used alone, electrode tortuosity, which is a problem of the silicon-containing negative electrode, may be simplified to improve the electrode structure, and accordingly, the movement resistance of lithium ions in the electrode may be reduced.

In an exemplary embodiment of the present invention, when the negative electrode conductive material includes the linear conductive material alone, the negative electrode conductive material may be included in an amount of 0.1 parts by weight or more and 5 parts by weight or less, preferably 0.2 parts by weight or more and 3 parts by weight or less, and more preferably 0.4 parts by weight or more and 1 parts by weight or less, based on 100 parts by weight of the negative electrode composition.

The negative electrode conductive material according to the present invention has a completely different configuration and role from the positive electrode conductive material applied to the positive electrode.

That is, the negative electrode conductive material according to the present invention serves to hold a contact point between the silicon-containing active materials having a very large volume expansion of the electrode by charging and discharging, and the positive electrode conductive material serves as a buffer of a buffering role when rolled and to impart some conductivity. Accordingly, the configuration and role of the positive electrode conductive material are completely different from those of the negative electrode conductive material of the present invention.

In addition, the negative electrode conductive material according to the present invention is applied to the silicon-containing active material, and has a configuration completely different from the conductive material applied to the graphite-containing active material. That is, the conductive material used in the electrode having the graphite-containing active material simply has smaller particles than the active material to have the characteristics of improving output properties and imparting some conductivity. Accordingly, like the present invention, the configuration and the role of the conductive material are completely different from those of the negative electrode conductive material applied together with the silicon-containing active material.

In an exemplary embodiment of the present invention, the planar conductive material used as the above-described negative electrode conductive material generally has different structure and role from the carbon-containing active material used as the negative electrode active material. Specifically, the carbon-containing active material used as the negative electrode active material may be artificial graphite or natural graphite, and refers to a material that is processed and used into a spherical shape or dot-type shape to facilitate the storage and release of lithium ions.

Also, the planar conductive material used as the negative electrode conductive material is a material having a planar or plate shape, and may be expressed as plate-like graphite. That is, the planar conductive material is a material included to maintain a conductive path in the negative electrode active material layer and refers to a material for securing a conductive path in a planar shape inside the negative electrode active material layer, not for storing and releasing lithium.

That is, in the present invention, the use of plate-like graphite as the conductive material means the use as a material which is processed into a planar shape or plate-like shape to secure a conductive path, not to store or release lithium. In this case, the negative electrode active material included together has high capacity characteristics for lithium storage and release, and serves to store and release all lithium ions transferred from the positive electrode.

On the other hand, in the present invention, the use of the carbon-containing active material as the active material means the use as a material which is processed into a dot-type shape or a spherical shape to store or release lithium.

In an exemplary embodiment of the present invention, the negative electrode binder includes a first binder having a Young's modulus of $10^3$ MPa or more and a second binder having a strain value of 15% or more.

In an exemplary embodiment of the present invention, there is provided the negative electrode composition in which the first binder includes at least one selected from the group consisting of polyacrylic acid (PAA), polyacrylonitrile (PAN), and polyacryl amide (PAM) and the second binder is a rubber-containing binder.

In an exemplary embodiment of the present invention, the negative electrode binder includes a first binder having a Young's modulus of $10^3$ MPa or more.

In another exemplary embodiment of the present invention, the negative electrode binder may satisfy the Young's modulus of $1 \times 10^3$ MPa or more, preferably $2 \times 10^3$ MPa or more, preferably $5 \times 10^3$ MPa or more, and more preferably $9 \times 10^3$ MPa or more, and $20 \times 10^3$ MPa or less, preferably $18 \times 10^3$ MPa or less, and more preferably $15 \times 10^3$ MPa or less. Other ends points and ranges include any combination of $3 \times 10^3$ MPa or more, $4 \times 10^3$ MPa or more, $6 \times 10^3$ MPa or more, $7 \times 10^3$ MPa or more, $8 \times 10^3$ MPa or more, and $10 \times 10^3$ MPa or more as well as $19 \times 10^3$ MPa or less, $17 \times 10^3$ MPa or less, $16 \times 10^3$ MPa or less, $14 \times 10^3$ MPa or less, $13 \times 10^3$ MPa or less, $12 \times 10^3$ MPa or less.

The first binder has both dispersibility for dispersing the negative electrode active material in the negative electrode slurry state containing the negative electrode composition and adhesive strength for binding with the negative electrode current collector layer and the negative electrode active material layer after drying, and corresponds to a binder of which the adhesive strength is not high. That is, the first binder according to the present invention includes an aqueous binder that satisfies the Young's modulus, and may mean a binder having a surface adhesive form.

The first binder is a binder suitable for a lithium secondary battery in which a silicon active material having a large volume expansion during charging and discharging is applied to a negative electrode, and it is difficult to effectively control the volume expansion of silicon when it is less than the lower limit of the above Young's modulus range, and it is more than the upper limit of the above Young's modulus range. If it is too rigid, it is likely that the bond will be broken during the charging and discharging process.

In an exemplary embodiment of the present invention, the aqueous binder is soluble in an aqueous solvent such as water and includes at least one selected from the group consist of polyvinyl alcohol (PVA), polyacrylic acid (PAA), polyethylene glycol (PEG), polyacrylonitrile (PAN), and polyacryl amide (PAM). In terms of having excellent resistance to volume expansion/contraction of the silicon-containing active material, the aqueous binder may include preferably at least one selected from the group consist of polyacrylic acid (PAA) and polyacryl amide (PAM), and more preferably polyacrylic acid (PAA) and polyacryl amide (PAM).

More specifically, the first binder may be a PAM-containing binder, and in this case, the PAM-containing binder is a binder having a main component of PAM, and may be used by controlling a ratio of PAM, PAA, and PAN, and may satisfy the Young's modulus as described above by appropriately changing the composition.

The first binder is better dispersed in an aqueous solvent such as water when preparing the negative electrode slurry for forming the negative electrode active material layer, and may include hydrogen in the first binder substituted with Li, Na, Ca, or the like in terms of improving the binding force by more smoothly coating the active material.

The first binder has a hydrophilic property and is insoluble in an electrolyte or an electrolyte solution generally used in a secondary battery. These characteristics may impart strong stress or tensile strength to the first binder when applied to the negative electrode or the lithium secondary battery, thereby effectively suppressing a volume expansion/-contraction problem caused by charge/discharge of the silicon-containing active material.

In an exemplary embodiment of the present invention, there is provided the negative electrode composition in which a weight average molecular weight of the first binder is 100,000 g/mol or more, 2,000,000 g/mol or more less, preferably 500,000 g/mol or more, and 1,500,000 g/mol or less.

In an exemplary embodiment of the present invention, the second binder may have a strain value of 15% or more, preferably 20% or more, and more preferably 30% or more, and more preferably 40% or more, and a strain value of 300% or less, preferably 200% or less, and more preferably 150 or less. Other endpoint values include any combination of strain value of 25% or more, 35% or more, 45% or more, as well as 75% or less, 65% or less and 55% or less.

As described above, when the strain value of the second binder is less than the above range, it may be difficult to effectively control the volume expansion of silicon due to high stress, and when it exceeds the above range, it may be difficult to effectively control the adhesive force between electrodes.

Since the first binder satisfies the above Young's modulus range and has strong stress, when the first binder alone is used, there is a risk of bending of the negative electrode, occurrence of cracks due to bending, and deterioration of life characteristics. The second binder may be soluble in an electrolyte or an electrolyte solution generally used in a secondary battery, and when used together with the first binder, stress of the first binder may be relieved to a certain level.

Therefore, the negative electrode composition of the present invention can improve lifespan characteristics by effectively solving the problem of volume expansion/ contraction of the silicon-containing active material by using a negative electrode binder including the first binder and the second binder in a specific weight ratio, and improving the lifespan of the thin film negative electrode. It is possible to solve the problem of warping during manufacturing, and also improve the adhesive strength.

In this case, the strain value of the second binder may be implemented within a range that satisfies the aforementioned range by specifically controlling a ratio of ST/BD (styrene/butadiene) of the SBR binder to an appropriate range.

In an exemplary embodiment of the present invention, the second binder is a material different from that of the first binder, and may be defined as being not dissolved in an aqueous solvent such as water well, but being smoothly, or homogenously dispersed in the aqueous solvent. Specifically, the second binder having the strain value of 15% or more may include at least one selected from the group consisting of styrene butadiene rubber (SBR), hydrogenated nitrile butadiene rubber (HNBR), acrylonitrile butadiene rubber, acrylic rubber, butyl rubber, and fluoro rubber, preferably may include at least one selected from the group consisting of SBR and HNBR in terms of having easy dispersion and excellent phase stability, and more preferably SBR.

In general, the second binder is a material having very high electrolyte wettability compared to the first binder. When the above-described second binder is located near the surface of the silicon-containing negative electrode, the negative electrode resistance is lowered because an fluoroethylene carbonate (FEC) solvent or $LiPF_6$ salt capable of forming an SEI layer may be quickly supplied.

In an exemplary embodiment of the present invention, Equation 1 above may satisfy $1 \leq X/Y < 4$, preferably $1.1 \leq X/Y < 3.9$, more preferably $1.2 \leq X/Y < 3.8$, more preferably $1.3 \leq X/Y < 3.7$, more preferably $1.4 \leq X/Y < 3.6$, more preferably $1.5 \leq X/Y < 3.5$, more preferably $1.6 \leq X/Y < 3.4$, more preferably $1.7 \leq X/Y < 3.3$, more preferably $1.8 \leq X/Y < 3.2$, more preferably $1.9 \leq X/Y < 3.1$, more preferably $2.0 \leq X/Y < 3.0$, and more preferably $1.2 \leq X/Y < 2.0$.

In an exemplary embodiment of the present invention, the X is 50 parts by weight or more and 95 parts by weight or less based on 100 parts by weight of the negative electrode binder, and the Y is 5 parts by weight or more and 50 parts by weight or less based on 100 parts by weight of the negative electrode binder.

In another exemplary embodiment, the X may be 50 parts by weight or more and 95 parts by weight or less, preferably 55 parts by weight or more and 90 parts by weight or less, more preferably 55 parts by weight or more and 80 parts by weight or less, more preferably 55 parts by weight or more and 70 parts by weight or less, more preferably 55 parts by weight or more and 67 parts by weight or less, and more preferably 60 parts by weight or more and 67 parts by weight or less, based on 100 parts by weight of the negative electrode binder.

In yet another exemplary embodiment, the Y may be 5 parts by weight or more and 50 parts by weight or less, preferably 10 parts by weight or more and 45 parts by weight or less, more preferably 20 parts by weight or more and 45 parts by weight or less, more preferably 33 parts by weight or more and 45 parts by weight or less, more preferably 35 parts by weight or more and 45 parts by weight or less, and more preferably 40 parts by weight or more and 45 parts by weight or less, based on 100 parts by weight of the negative electrode binder.

As described above, the negative electrode binder according to the present invention is characterized that the first binder and the second binder satisfy the above contents to improve dispersibility even when the silicon-containing active material is used, and also solve the problem of adhesive strength.

Since the first binder has strong stress by satisfying the above-described modulus range, in the case of using the first binder alone, there is a risk of bending of the negative electrode, generation of cracks due to bending, and deterioration of lifespan characteristics.
The second binder may be well dissolved in an electrolyte or an electrolyte solution generally used in the secondary battery, and when used together with the first binder, stress of the first binder may be reduced to a certain level.

Therefore, the negative electrode composition of the present invention uses the negative electrode binder including the first binder and the second binder in a specific weight ratio to effectively solve the volume expansion/contraction problem of silicon-containing active materials, thereby improving the lifespan characteristics, solving the problem of bending when manufacturing a thin film negative electrode, and also improving adhesive strength.

Furthermore, in the case of including the negative electrode binder and a planar conductive material and a linear conductive material as the negative electrode conductive material, it is possible to improve the internal resistance of the negative electrode while improving the problem of adhesive strength.

In an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid and materials in which hydrogens thereof are substituted with Li, Na or Ca, and also include various copolymers thereof.

In an exemplary embodiment of the present invention, there is provided the negative electrode composition in which the negative electrode binder is included in an amount of 1 part by weight or more and 20 parts by weight or less based on 100 parts by weight of the negative electrode composition.

In an exemplary embodiment of the present invention, the negative electrode binder may be included in an amount of 20 parts by weight or less, preferably 15 parts by weight or less based on 100 parts by weight of the negative electrode composition, and may be included in an amount of 1 part by weight or more, 5 parts by weight or more, 10 parts by weight or more.

In an exemplary embodiment of the present invention, there is provided a negative electrode for a lithium secondary battery including a negative electrode current collector layer; and a negative electrode active material layer including the negative electrode composition according to the present invention on one surface or both surfaces of the negative electrode current collector layer.

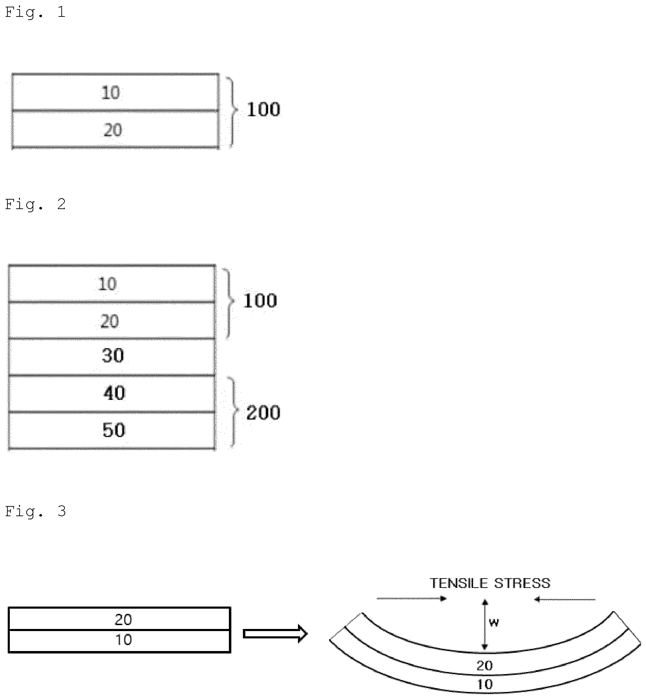

FIG. 1 is a schematic illustrating a stacked structure of a negative electrode for a lithium secondary battery according to an exemplary embodiment of the present invention. Specifically, it can be seen that a negative electrode 100 for the lithium secondary battery includes a negative electrode active material layer 20 on one surface of a negative electrode current collector layer 10, and FIG. 1 illustrates that the negative electrode active material layer is formed on one surface, but the negative electrode active material layer may be formed on both surfaces of the negative electrode current collector layer.

In an exemplary embodiment of the present invention, the negative electrode for the lithium secondary battery may be formed by coating a negative electrode slurry including the negative electrode composition on one surface or both surfaces of the current collector.

In an exemplary embodiment of the present invention, the negative electrode slurry may include a negative electrode composition; and a slurry solvent.

In an exemplary embodiment of the present invention, the solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solids content of the negative electrode slurry may mean the content of the negative electrode composition included in the negative electrode slurry, and may mean the content of the negative electrode composition based on 100 parts by weight of the negative electrode slurry.

In the case where the solid content of the negative electrode slurry satisfies the above range, the viscosity is appropriate when the negative electrode active material layer is formed to minimize particle aggregation of the negative electrode composition, thereby efficiently forming the negative electrode active material layer.

In an exemplary embodiment of the present invention, the negative electrode current collector layer generally has a thickness of 1 $\mu$m to 100 $\mu$m. Such a negative electrode current collector layer is not particularly limited as long as the negative electrode current collector layer has high conductivity without causing a chemical change in the corresponding battery, and may be used with, for example, copper, stainless steel, aluminum, nickel, titanium, calcined carbon, copper or stainless steel surface-treated with carbon, nickel, titanium, silver, etc., an aluminum-cadmium alloy, etc. In addition, the bonding strength of the negative electrode active material may be strengthened by forming fine unevenness on the surface, and may be used in various forms, such as a film, a sheet, a foil, a net, a porous body, a foam body, a non-woven body, and the like.

In an exemplary embodiment of the present invention, there is provided the negative electrode for the lithium secondary battery in which the thickness of the negative electrode current collector layer is 1 $\mu$m or more and 100 $\mu$m or less, and the thickness of the negative electrode active material layer is 20 $\mu$m or more and 500 $\mu$m or less.

However, the thickness may be variously modified depending on the type and use of the negative electrode used, but is not limited thereto.

In an exemplary embodiment of the present invention, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies according to the composition and contents of the silicon-containing active material; the conductive material; and the binder included in the negative electrode active material layer, and particularly, may satisfy the range by including a specific composition and content parts of the silicon-containing active material; and the conductive material according to the present invention to have an appropriate range of electric conductivity and resistance in the electrode.

In an exemplary embodiment of the present invention, there is provided the negative electrode for the lithium secondary battery in which the adhesive strength of a surface in contact with the negative electrode current collector layer of the negative electrode active material layer satisfies 100 gf/5 mm or more and 500 gf/5 mm or less under conditions of 25°C and normal pressure.

In another exemplary embodiment of the present invention, the adhesive strength of the surface in contact with the negative electrode current collector layer of the negative electrode active material layer may satisfy 100 gf/5 mm or more and 500 gf/5 mm or less, preferably 300 gf/5 mm or more and 450 gf/5 mm or less, and more preferably 350 gf/5 mm or more and 430 gf/5 mm or less under conditions of 25°C and normal pressure.

In particular, the negative electrode according to the present invention includes a specific negative electrode binder as the above-described negative electrode composition, thereby improving the adhesive strength as described above. In addition, even if the expansion and contraction of the silicon-containing active material is repeated by repeating the charging and discharging of the negative electrode, the negative electrode binder and the negative electrode conductive material at a specific composition are applied, thereby maintaining a conductive network and suppressing an increase in resistance by preventing the disconnection.

The adhesive strength was measured at a speed of 5 mm/s at 90° using a 3M 9070 tape as a peel strength measuring instrument. Specifically, one surface of the negative electrode active material layer of the negative electrode for the lithium secondary battery adheres to one surface of a slide glass (3M 9070 tape) to which an adhesive film is attached. Thereafter, the attachment is repeated 5 to 10 times with a 2 kg rubber roller, and the adhesive strength (peel strength) was measured in an angular direction of 90° at a speed of 5 mm/s. In this case, the adhesive strength may be measured at 25°C under normal pressure conditions.

Specifically, the adhesive strength was measured at 25°C and normal pressure conditions with respect to a 5 mm x 15 cm electrode.

In an exemplary embodiment of the present invention, the normal pressure may mean a pressure in a state where a specific pressure is not applied or lowered, and may be used as the same meaning as atmospheric pressure. The normal pressure may usually be expressed as 1 atm.

In an exemplary embodiment of the present invention, there is provided a lithium secondary battery including a positive electrode; the negative electrode for the lithium secondary battery according to the present invention; a separator provided between the positive electrode and the negative electrode; and an electrolyte.

FIG. 2 is a schematic illustrating a stacked structure of a lithium secondary battery according to an exemplary embodiment of the present invention. Specifically, there may be confirmed a negative electrode 100 for the lithium secondary battery including a negative electrode active material layer 20 on one surface of a negative electrode current collector layer 10, and there may be confirmed a positive electrode 200 for the lithium secondary battery including a positive electrode active material layer 40 on one surface of a positive electrode current collector layer 50. It is illustrated that the negative electrode 100 for the lithium secondary battery and the positive electrode 200 for the lithium secondary battery are formed in a stacked structure with the separator 30 interposed therebetween.

In particular, the secondary battery according to an exemplary embodiment of the present invention may include the negative electrode for the lithium secondary battery described above. Specifically, the secondary battery may include a negative electrode, a positive electrode, a separator interposed between the positive electrode and the negative electrode, and an electrolyte, and the negative electrode is the same as the aforementioned negative electrode. Since the negative electrode has been described above, a detailed description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change in the battery, and may be used with, for example, stainless steel, aluminum, nickel, titanium, calcined carbon or aluminum or stainless steel surface-treated with carbon, nickel, titanium, silver, etc. In addition, the positive electrode current collector may generally have a thickness of 3 $\mu$m to 500 $\mu$m, and fine unevenness may be formed on the surface of the current collector to increase the adhesive strength of the positive electrode active material. For example, the positive electrode current collector may be used in various forms, such as a film, a sheet, a foil, a net, a porous body, a foam body, and a non-woven body.

The positive electrode active material may be a commonly used positive electrode active material. Specifically, the positive electrode active material may include layered compounds such as lithium cobalt oxide ($LiCoO_2$) and lithium nickel oxide ($LiNiO_2$), or compounds substituted with one or more transition metals; lithium iron oxides such as $LiFe_3O_4$; lithium manganese oxides of Chemical Formula $Li_{1+c1}Mn_{2-c1}O_4$ ($0 \leq c1 \leq 0.33$), such as $LiMnO_3$, $LiMn_2O_3$, $LiMnO_2$, etc.; lithium copper oxide ($Li_2CuO_2$) ; vanadium oxides such as $LiV_3O_8$, $V_2O_5$, and $Cu_2V_2O_7$; Ni site-type lithium nickel oxides represented by Chemical Formula $LiNi_{1-c2}M_{c2}O_2$ (wherein, M is at least one selected from the group consisting of Co, Mn, Al, Cu, Fe, Mg, B and Ga, and satisfies $0.01 \leq c2 \leq 0.3$); lithium-manganese composite oxides represented by Chemical Formula $LiMn_{2-c3}M_{c3}O_2$ (wherein, M is at least one selected from the group consisting of Co, Ni, Fe, Cr, Zn, and Ta, and satisfies $0.01 \leq c3 \leq 0.1$) or $Li_2Mn_3MO_8$ (wherein, M is at least one selected from the group consisting of Fe, Co, Ni, Cu, and Zn.); $LiMn_2O_4$ in which part of Li in Chemical Formula is substituted with alkaline earth metal ions; and the like, but is not limited thereto. The positive electrode may also be Li-metal.

The positive electrode active material layer may include a positive electrode conductive material and a positive electrode binder together with the above-described positive electrode active material.

In this case, the positive electrode conductive material is used to impart conductivity to the electrode, and in the configured battery, the positive electrode conductive material can be used without any particular limitation as long as the positive electrode conductive material has electronic conductivity without causing a chemical change. As a specific example, the positive electrode conductive material may include graphite such as natural graphite and artificial graphite; carbon-containing materials such as carbon black, acetylene black, Ketjen black, channel black, furnace black, lamp black, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, or the like, and may be used with one type alone or a mixture of 2 types or more thereof.

In addition, the positive electrode binder serves to improve attachment between the positive electrode active material particles and adhesive strength between the positive electrode active material and the positive electrode current collector. As a specific example, the positive electrode binder may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated-EPDM, styrene butadiene rubber (SBR), fluororubber, various copolymers thereof, or the like, and may be used with one type alone or a mixture of 2 types or more thereof.

The separator separates the negative electrode and the positive electrode and provides a moving path for lithium ions, and generally, as long as the separator is used as separators in the secondary battery, the separator can be used without any particular limitation, and in particular, it is preferable to have low resistance to ion movement of the electrolyte and to have excellent moisture content in the electrolyte. Specifically, a porous polymer film, for example, a porous polymer film made of a polyolefin-containing polymer such as an ethylene homopolymer, a propylene homopolymer, an ethylene/butene copolymer, an ethylene/hexene copolymer, and an ethylene/methacrylate copolymer, or a stacked structure of two or more layers thereof may be used. In addition, a general porous nonwoven fabric, for example, a nonwoven fabric made of high melting point glass fiber, polyethylene terephthalate fiber, etc., may also be used. In addition, in order to secure heat resistance or mechanical strength, a coated separator containing a ceramic component or a polymer material may be used, and may optionally be used in a single-layer or multi-layer structure.

Examples of the electrolyte may include organic liquid electrolytes, inorganic liquid electrolytes, solid polymer electrolytes, gel-type polymer electrolytes, solid inorganic electrolytes, and molten inorganic electrolytes that can be used in manufacturing the lithium secondary battery, but are not limited thereto.

Specifically, the electrolyte may include a non-aqueous organic solvent and a metal salt.

Examples of the non-aqueous organic solvent may be used with aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, triester phosphate, trimethoxymethane, dioxolane derivative, sulfolane, methyl sulfolane, 1,3-dimethyl-2-imidazolidinone, propylene carbonate derivatives, tetrahydrofuran derivatives, ether, methyl pyropionate, and ethyl pyropionate.

In particular, among the carbonate-containing organic solvents, ethylene carbonate and propylene carbonate, which are cyclic carbonates, are highly viscous organic solvents and may be preferably used due to a high dielectric constant to dissociate lithium salts well. When the cyclic carbonate is mixed and used with linear carbonate having low-viscosity and low-dielectric constant such as dimethyl carbonate and diethyl carbonate in an appropriate ratio, an electrolyte having high electrical conductivity may be prepared, which may be more preferably used.

A lithium salt may be used as the metal salt, and the lithium salt is a material that is easily soluble in the non-aqueous electrolyte, and for example, negative ions of the lithium salt may be used with at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In addition to the electrolyte components, the electrolyte may also further include one or more additives of, for example, haloalkylene carbonate-containing compounds such as difluoroethylene carbonate, pyridine, triethyl phosphite, triethanolamine, cyclic ether, ethylene diamine, n-glyme, hexaphosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxyethanol or aluminum trichloride, for the purpose of improving lifespan characteristics of the battery, suppressing reduction in battery capacity, improving a battery discharge capacity, and the like.

An exemplary embodiment of the present invention provides a battery module including the secondary battery as a unit cell and a battery pack including the battery modules. Since the battery module and the battery pack include the secondary battery having high capacity, high rate-controlling characteristics and cycle characteristics, the battery module and the battery pack may be used as a power source for a medium-to-large device selected from the group consisting of an electric vehicle, a hybrid electric vehicle, a plug-in hybrid electric vehicle, and a power storage system.

In another embodiment, a negative electrode is manufactured using the negative electrode composition. A negative electrode slurry is obtained by adding a solvent to the negative electrode composition. The negative electrode slurry is coated onto at least one surface of a negative electrode current collector to form a negative electrode active material layer. The negative electrode active material layer coated on the negative electrode current collector is dried and rolled to manufacture the negative electrode.

The solvent of the negative electrode slurry may be, for instance, distilled water.

In an embodiment of the present application, the negative electrode slurry may satisfy a solid content of 5% or more and 40% or less.

In another embodiment, the negative electrode slurry may satisfy a solid content range of 5% or more and 40% or less, preferably 7% or more and 35% or less, and more preferably 10% or more and 30% or less.

The solid content of the negative electrode slurry may mean the amount of the negative electrode composition contained in the negative electrode slurry, and may mean the amount of the negative electrode composition based on 100 parts by weight of the negative electrode slurry.

When the negative electrode slurry satisfies the above solid content range of 5% or more and 40% or less, the negative electrode active material layer has a suitable viscosity during the formation of the negative electrode active material layer so that particle agglomeration phenomenon of the negative electrode composition is minimized to have characteristics capable of efficiently forming the negative electrode active material layer.

Hereinafter, preferred Examples of the present invention will be provided in order to facilitate understanding of the present invention, but it will be apparent to those skilled in the art that the following Examples are only illustrative of the present invention and various changes and modifications can be made within the scope and spirit of the present invention, and it is natural that these variations and modifications are within the scope of the appended claims.

**<Preparation Examples>**

**<Preparation of negative electrode composition>**

Negative electrode compositions satisfying compositions and contents of Table 1 below were prepared, respectively.

[Table 1]

| | Silicon-containing active material | | Negative electrode conductive material | | Negative electrode binder | | |
|---|---|---|---|---|---|---|---|
| | Type | Content | Type | Content | First binder (content) | Second binder (content) | Equati on 1 |
| Example 1 | Si | 89 | SWCNT | 1 | PAM-1 (4.5) | SBR-1(5.5) | 1.2 |
| Example 2 | Si | 89 | SWCNT | 1 | PAM-2 (4.5) | SBR-1(5.5) | 1.2 |
| Example 3 | Si | 89 | SWCNT | 1 | PAM-1 (4.5) | SBR-2(5.5) | 1.2 |
| Example 4 | Si | 89 | SWCNT | 1 | PAM-1 (3.3) | SBR-1(6.7) | 2 |
| Example 5 | Si | 80 | SWCNT/pl ate-like conductive material A | 0.4/9.6 | PAM-1 (4.5) | SBR-1(5.5) | 1.2 |
| Example 6 | Si | 89 | SWCNT | 1 | PAM-2 (4.5) | SBR-2(5.5) | 1.2 |
| Comparative Example 1 | Si | 89 | SWCNT | 1 | PAM-1 (10) | - | - |
| Comparative Example 2 | Si | 89 | SWCNT | 1 | - | SBR-1(10) | - |
| Comparative Example 3 | Si | 89 | SWCNT | 1 | PAM-1 (1.6) | SBR-1(8.4) | 5.25 |
| Comparative Example 4 | Si | 89 | SWCNT | 1 | PAM-1 (6) | SBR-1(4) | 0.66 |
| Comparative Example 5 | Si | 89 | SWCNT | 1 | PAN(5.5) | SBR-1(4.5) | 0.82 |
| Comparative Example 6 | Si | 89 | SWCNT | 1 | PAM-1 (5.5) | SBR-3(4.5) | 0.82 |

In Table 1 above, Si (average particle diameter (D50): 5 $\mu$m) was used as a silicon-containing active material, and a plate-like conductive material A had a BET specific surface area of 17 $m^2$/g and D10:1.7 $\mu$m, D50:3.5 $\mu$m, D90:6.8 $\mu$m, and SWCNT was used with a material having a BET specific surface area of about 1000 $m^2$/g to 1500 $m^2$/g and an aspect ratio of 10000 or more.

In addition, in Table 1 above, as a first binder, PAM-1 was a binder having a Young's modulus of 15 x $10^3$ MPa (= 15 GPa), PAM-2 was a binder having a Young's modulus of 9 x $10^3$ MPa (= 9 GPa), and PAN had a Young's modulus of $10^2$ MPa. The weight average molecular weight of the first binder satisfies a level of $5.0 \times 10^5$ to $1.5 \times 10^6$.

In addition, in Table 1 above, as a second binder, SBR-1 was a binder with 60% strain value, SBR-2 was a binder with 40% strain value, and SBR-3 was a binder with 10% strain value.

In this case, the Young's modulus of the first binder satisfied the above range by controlling a mixing ratio of PAA and PAN in the binder having PAM as a main component, and the strain value of the second binder was implemented to satisfy the above range by controlling the ratio of ST/BD in the SBR binder.

The weight average molecular weight of the first binder satisfies the level of $5.0 \times 10^5$ to $1.5 \times 10^6$, The weight

average molecular weight of the second binder before cross-linking can be measured, but since the actual form used is spherical particles, the weight average molecular weight cannot be measured.

In Table 1 above, the content may mean a weight ratio (parts by weight) of each composition based on 100 parts by weight of the total negative electrode composition.

## Manufacture of negative electrode

A negative electrode slurry was prepared by adding distilled water as a solvent for forming the negative electrode slurry to the negative electrode composition having the composition of Table 1 above (solid concentration: 25 wt%).

Thereafter, the negative electrode loading amount was set to 76.34 mg/25 cm$^2$ with a thickness of 38 $\mu$m on a Cu foil with a thickness of 8 $\mu$m, a negative electrode active material layer coated and then dried at 130°C for 12 hours, and rolled at the porosity of the negative electrode of 40% to manufacture a negative electrode.

## <Manufacture of secondary battery>

LiNi$_{0.6}$Co$_{0.2}$Mn$_{0.2}$O$_2$ (average particle diameter (D50) : 15 $\mu$m) as a positive electrode active material, carbon black (product name: Super C65, manufacturer: Timcal) as a conductive material, and polyvinylidene fluoride (PVdF) as a binder were added to N-methyl-2-pyrrolidone (NMP) as a solvent for forming a positive electrode slurry in a weight ratio of 97:1.5:1.5 to prepare a positive electrode slurry (solid concentration 78 wt%).

The positive electrode slurry was coated on both surfaces of an aluminum current collector (thickness: 12 $\mu$m) as a positive electrode current collector at a loading amount of 537 mg/25 cm$^2$, roll-pressed, and dried for 10 hours in a vacuum oven of 130°C to form a positive electrode active material layer (thickness: 65 $\mu$m) and manufacture a positive electrode (thickness of positive electrode: 77 $\mu$m, porosity 260).

A lithium secondary battery was manufactured by interposing a polyethylene separator between the positive electrode and the negative electrode of Example and Comparative Example and injecting an electrolyte.

The electrolyte was obtained by adding 3 wt% of vinylene carbonate based on the total weight of the electrolyte to an organic solvent in which fluoroethylene carbonate (FEC) and diethyl carbonate (DEC) were mixed in a volume ratio of 10:90, and adding LiPF$_6$ as a lithium salt at a concentration of 1 M.

Except for using the negative electrodes of Examples and Comparative Examples above, a monocell was prepared in the same manner as above, and lifespan characteristics were evaluated in the range of 4.2 to 3.0 V.

## Experiment Example 1: Evaluation of lifespan characteristics of monocell at room temperature (25°C, 4.2 to 3.0 V)

With respect to the secondary battery including the negative electrode prepared in Examples and Comparative Examples above, lifespan evaluation was performed using an electrochemical charger and discharger, and a capacity retention rate was evaluated. The secondary battery was subjected to a cycle test at 4.2 to 3.0 V 1C/0.5C, and the number of cycles at which the capacity retention rate reached 80% was measured.

Capacity retention rate (%) = {(discharge capacity at Nth cycle)/(discharge capacity at first cycle)} X 100

The result thereof was shown in Table 2 below.

## Experiment Example 2: Evaluation of measuring monocell resistance increase rate (250 cycle, @SOC50, discharge)

In the test in Experimental Example 1, after the capacity retention rate was measured by charging/discharging (4.2 to 3.0 V) at 0.33C/0.33C every 50 cycles, discharging was performed at SOC50 at 2.5C pulse to measure the resistance and the resistance increase rate was compared and analyzed.

For the evaluation of measuring the resistance increase rate, data at 250 cycles were calculated, and the results were shown in Table 2-1 and Table 2-2 below.

## Experiment Example 3: Evaluation of lifespan characteristics of monocell at high temperature (45°C, 4.2 to 3.0 V)

With respect to the secondary battery including the negative electrode prepared in Examples and Comparative Examples above, lifespan evaluation was performed using an electrochemical charger and discharger, and a capacity retention rate was evaluated. The secondary battery was subjected to a cycle test at 4.2 to 3.0 V 1C/0.5C, and the number of cycles at which the capacity retention rate reached 80% was measured.

The result thereof was shown in Table 2-1 and Table 2-2 below.

**Experiment Example 4: Measurement of electrode curl**

As illustrated in FIG. 3, the degree of bending was measured by placing a coating part of the coated electrode upward and measuring the height of a center. That is, when the binder was dried, the coating part becomes concave due to the tensile action, and thus, curl occurred, and the degree of curl was measured, and the results were shown in Table 2 below.

[Table 2-1] Examples 1-6

|  | Example 1 | Example 2 | Example 3 | Example 4 | Example 5 | Example 6 |
|---|---|---|---|---|---|---|
| Evaluation of SOH80% (cycle) lifespan characteristics at room temperature (4.2 to 3.0 V) | 248 | 238 | 241 | 230 | 223 | 242 |
| Resistance increase rate (%, @250cycle, discharge) | 43 | 47 | 45 | 50 | 53 | 60 |
| Evaluation of SOH80% (cycle) lifespan characteristics at high temperature (4.2 to 3.0 V) | 230 | 218 | - | - | - | - |
| Curl evaluation (mm) | 13 | - | 9 | 7 | - | - |

[Table 2-2] Comparative Examples 1-6

|  | Comp. Example 1 | Comp. Example 2 | Comp. Example 3 | Comp. Example 4 | Comp. Example 5 | Comp. Example 6 |
|---|---|---|---|---|---|---|
| Evaluation of SOH80% (cycle) lifespan characteristics at room temperature (4.2 to 3.0 V) | 203 | 150 | 163 | 200 | 170 | 131 |
| Resistance increase rate (%, @250cycle, discharge) | 100 | 200 | 130 | 105 | 120 | 300 |
| Evaluation of SOH80% (cycle) lifespan characteristics at high temperature (4.2 to 3.0 V) | 189 | 130 | - | - | - | - |
| Curl evaluation (mm) | 25 | - | - | 20 | 5 | - |

As Examples 1 to 6, it could be confirmed that a first binder and a second binder were included and a specific Equation 1 was satisfied, and in particular, SBR having a certain range of strain was blended to maintain a contact point between the active materials even in volume expansion according to the cycle progress, so that the resistance increase rate was low, and accordingly, the lifespan performance at room temperature and high temperature was also excellent.

For reference, when comparing Examples 1, 3 and 4 with Comparative Examples 1, 4 and 5, it was confirmed that the higher the ratio of SBR, less curling occurred on the electrode, which was advantageous for process stability, and like Comparative Example 4, it was confirmed that the curl phenomenon became severe when the ratio of SBR was less than the ratio of the present invention.

For reference, Comparative Example 1 corresponds to a case where the second binder is not included, Comparative Example 2 corresponds to a case where the first binder is not included, Comparative Example 3 corresponds to a case where the first and second binders are included, but the content range exceeds the range of Equation 1, Comparative Example 4 corresponds to a case where the content range is less than the range of Equation 1, Comparative Example 5 corresponds to a case where the range of Equation 1 is satisfied, but the Young's modulus of the first binder is less than the range of the present invention, and Comparative Example 6 corresponds to a case where the range of Equation 1 is satisfied, but the strain value of the second binder is less than the range of the present invention.

When each of Comparative Examples 1 to 6 was confirmed, it was confirmed that lifespan characteristics were lower than those of Examples 1 to 6 according to the present invention and the resistance increase rate was high, and also confirmed that the curl phenomenon also occurred frequently.

That is, it was confirmed that the negative electrode composition according to the present application improves the dispersibility for dispersing the active material even when the silicon-containing active material is used, and further includes the first and second binders of specific compositions to improve adhesive strength to solve the problem of disconnection of the conductive network due to adhesive strength and volume expansion at the early and late stages of the battery using the silicon-containing active material.

That is, it was confirmed that the negative electrode composition according to the present invention has a high content of silicon-containing active material particles to obtain a high-capacity and high-density negative electrode, and simultaneously has a high content of silicon-containing active material particles to solve the problems such as volume expansion and the like.

**Claims**

1. A negative electrode composition, comprising:

   a silicon-containing active material;
   a negative electrode conductive material; and
   a negative electrode binder,
   wherein the negative electrode binder comprises a first binder having a Young's modulus of $1 \times 10^3$ MPa or more and a second binder having a strain value of 15% or more, and
   wherein the negative electrode binder satisfies the following Equation 1:

$$[\text{Equation 1}]$$

$$1 \leq X/Y < 4$$

   in Equation 1,
   Y means parts by weight of the first binder based on 100 parts by weight of the negative electrode binder, and
   X means parts by weight of the second binder based on 100 parts by weight of the negative electrode binder.

2. The negative electrode composition of claim 1,
   wherein X is 50 parts by weight or more and 95 parts by weight or less based on 100 parts by weight of the negative electrode binder, and
   Y is 5 parts by weight or more and 50 parts by weight or less based on 100 parts by weight of the negative electrode binder.

3. The negative electrode composition of claim 1, wherein the negative electrode binder is present in an amount of 1 part by weight or more and 20 parts by weight or less based on 100 parts by weight of the negative electrode composition.

4. The negative electrode composition of claim 1, wherein the first binder comprises at least one selected from the group consisting of polyacrylic acid (PAA), polyacrylonitrile (PAN), and polyacryl amide (PAM), and
   wherein the second binder is a rubber-containing binder.

5. The negative electrode composition of claim 1, wherein the silicon-containing active material is present in an amount of 60 parts by weight or more based on 100 parts by weight of the negative electrode composition.

6. The negative electrode composition of claim 1, wherein the silicon-containing active material comprises one or more selected from the group consisting of Si particles, SiOx (0 < x < 2), SiC, and Si alloys.

7. The negative electrode composition of claim 1,
   wherein the silicon-containing active material comprises one or more selected from the group consisting of Si particles and SiOx (0 < x < 2),
   wherein the Si particles are present in an amount of 70 parts by weight or more based on 100 parts by weight of the silicon-containing active material.

8. The negative electrode composition of claim 1,
   wherein the negative electrode conductive material is present in an amount of 0.1 part by weight or more and 40 parts by weight or less based on 100 parts by weight of the negative electrode composition.

9. The negative electrode composition of claim 1,
   wherein the negative electrode conductive material comprises one or more selected from the group consisting of a dot type conductive material, a planar conductive material, and a linear conductive material.

10. The negative electrode composition of claim 9,
    wherein the negative electrode conductive material comprises 80 parts by weight or more and 99.9 parts by weight or less of the planar conductive material; and 0.1 part by weight or more and 20 parts by weight or less of the linear conductive material based on 100 parts by weight of the negative electrode conductive material.

11. The negative electrode composition of claim 1,
    wherein a weight average molecular weight of the first binder ranges from 100,000 g/mol or more and 2,000,000 g/mol or less.

12. A negative electrode for a lithium secondary battery comprising:

    a negative electrode current collector layer; and
    a negative electrode active material layer comprising the negative electrode composition according to claim 1 on one surface or both surfaces of the negative electrode current collector layer.

13. The negative electrode for the lithium secondary battery of claim 12, wherein the adhesive strength of a surface in contact with the negative electrode current collector layer of the negative electrode active material layer satisfies 100 gf/5 mm or more and 500 gf/5 mm or less under 25°C and normal pressure conditions.

14. The negative electrode for the lithium secondary battery of claim 12, wherein the thickness of the negative electrode current collector layer is 1 $\mu$m or more and 100 $\mu$m or less, and
    the thickness of the negative electrode active material layer is 20 $\mu$m or more and 500 $\mu$m or less.

15. A lithium secondary battery comprising:

    a positive electrode;
    the negative electrode for the lithium secondary battery according to claim 12;
    a separator provided between the positive electrode and the negative electrode; and
    an electrolyte.

Fig. 1

Fig. 2

Fig. 3

## INTERNATIONAL SEARCH REPORT

International application No.

**PCT/KR2023/008714**

### A. CLASSIFICATION OF SUBJECT MATTER

**H01M 4/134**(2010.01)i; **H01M 4/38**(2006.01)i; **H01M 4/62**(2006.01)i; **H01M 4/1395**(2010.01)i; **H01M 4/04**(2006.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/134(2010.01); H01M 10/052(2010.01); H01M 10/0525(2010.01); H01M 10/0562(2010.01); H01M 4/13(2010.01); H01M 4/36(2006.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 조성물(anode composition), 리튬이차전지(lithium secondary battery), 음극 바인더(anode binder), 실리콘계 활물질(silicon active material)

### C. DOCUMENTS CONSIDERED TO BE RELEVANT

| Category* | Citation of document, with indication, where appropriate, of the relevant passages | Relevant to claim No. |
|---|---|---|
| X | KR 10-2014-0147052 A (LG CHEM, LTD.) 29 December 2014 (2014-12-29)<br>See paragraphs [0045], [0047], [0083] and [0094]; and claims 20 and 22-23. | 1-9,11-15 |
| Y | | 10 |
| Y | KR 10-2020-0089568 A (LG CHEM, LTD.) 27 July 2020 (2020-07-27)<br>See paragraph [0117]. | 10 |
| A | KR 10-2018-0006140 A (KOKAM CO., LTD.) 17 January 2018 (2018-01-17)<br>See entire document. | 1-15 |
| A | US 10008716 B2 (NEXEON LIMITED) 26 June 2018 (2018-06-26)<br>See entire document. | 1-15 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 September 2023** | **21 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/008714**

C.      DOCUMENTS CONSIDERED TO BE RELEVANT

| Category* | Citation of document, with indication, where appropriate, of the relevant passages | Relevant to claim No. |
|---|---|---|
| A | KR 10-2108136 B1 (KOREA INSTITUTE OF INDUSTRIAL TECHNOLOGY et al.) 07 May 2020 (2020-05-07)<br>      See entire document. | 1-15 |

**INTERNATIONAL SEARCH REPORT**
Information on patent family members

International application No.

**PCT/KR2023/008714**

| Patent document cited in search report | | | Publication date (day/month/year) | Patent family member(s) | | | Publication date (day/month/year) |
|---|---|---|---|---|---|---|---|
| KR | 10-2014-0147052 | A | 29 December 2014 | CN | 105308780 | A | 03 February 2016 |
| | | | | CN | 105308780 | B | 11 September 2018 |
| | | | | US | 2015-0125747 | A1 | 07 May 2015 |
| | | | | US | 9515321 | B2 | 06 December 2016 |
| KR | 10-2020-0089568 | A | 27 July 2020 | CN | 113692657 | A | 23 November 2021 |
| | | | | EP | 3893295 | A1 | 13 October 2021 |
| | | | | EP | 3893295 | A4 | 16 February 2022 |
| | | | | KR | 10-2439661 | B1 | 02 September 2022 |
| | | | | US | 2022-0149376 | A1 | 12 May 2022 |
| | | | | WO | 2020-149682 | A1 | 23 July 2020 |
| KR | 10-2018-0006140 | A | 17 January 2018 | KR | 10-1875031 | B1 | 05 July 2018 |
| US | 10008716 | B2 | 26 June 2018 | CN | 104885262 | A | 02 September 2015 |
| | | | | CN | 104885262 | B | 05 April 2019 |
| | | | | EP | 2915204 | A1 | 09 September 2015 |
| | | | | EP | 2915204 | B1 | 10 January 2018 |
| | | | | JP | 2015-537347 | A | 24 December 2015 |
| | | | | JP | 6277197 | B2 | 07 February 2018 |
| | | | | KR | 10-2015-0086288 | A | 27 July 2015 |
| | | | | US | 2015-0280221 | A1 | 01 October 2015 |
| | | | | WO | 2014-068318 | A1 | 08 May 2014 |
| KR | 10-2108136 | B1 | 07 May 2020 | KR | 10-2020-0018126 | A | 19 February 2020 |

Form PCT/ISA/210 (patent family annex) (July 2022)

**EP 4 468 396 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220076784
- JP 2009080971 A